Europäisches Patentamt

European Patent Office

Office européen des brevets

(19)

(11) Veröffentlichungsnummer: **0 322 620**

**A1**

## EUROPÄISCHE PATENTANMELDUNG

(21) Anmeldenummer: 88120679.1

(22) Anmeldetag: 10.12.88

(51) Int. Cl.⁴ **H01M 4/66 , H01M 10/39**

(30) Priorität: 16.12.87 DE 3742608

(43) Veröffentlichungstag der Anmeldung:
05.07.89 Patentblatt 89/27

(84) Benannte Vertragsstaaten:
AT DE FR GB IT SE

(71) Anmelder: **Asea Brown Boveri
Aktiengesellschaft
Kallstadter Strasse 1
D-6800 Mannheim 31(DE)**

(72) Erfinder: **Knödler, Reinhard, Dr. rer. nat.
Lattweg 17
D-6902 Sandhausen(DE)**
Erfinder: **Reiss, Karl
Panoramastrasse 4
D-6913 Mühlheim-Rettigheim(DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1(DE)**

(54) Elektrochemische Speicherzelle.

(57) Die Erfindung bezieht sich auf eine elektrochemische Speicherzelle auf der Basis von Natrium und
Schwefel, die nach außen hin durch ein metallisches
Gehäuse (2) begrenzt ist. Aufgabe der Erfindung ist
es, eine elektrochemische Speicherzelle (1) aufzuzeigen, die über einen Korrosionsschutz für ihre
metallischen Bauteile verfügt, der kostengünstig hergestellt werden kann. Erfindungsgemäß sind die metallischen Bauteile (2) der Speicherzelle (1) von einer
Korrosionsschutzschicht (10) überzogen, die durch
eine Legierung gebildet wird, deren wesentliche Bestandteile Aluminium, Chrom und Eisen sind.

## Elektrochemische Speicherzelle

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrten Maße ihre Anwendung beim Aufbau von Hochtemperaturspeicherbatterien, die zur Stromversorgung von Elektrofahrzeugen vorgesehen sind.

Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Als Vorteil dieser Speicherzellen ist hervorzuheben, daß beim Aufladen derselben keine elektrochemischen Nebenraktionen ablaufen, und die Stromausbeute daher etwa bei 100 % liegt. Bei solchen Speicher-zellen ist der Anodenraum mit Natrium gefüllt und innerhalb des Festelektrolyten angeordnet. Der Kathodenraum liegt zwischen dem Festelektrolyten und dem metallischen Gehäuse, welches die Speicherzelle nach außen hin begrenzt. Für die Herstellung des Gehäuses wird vorzugsweise ein Leichtmetall, insbesondere Aluminium verwendet. Die in der Speicherzelle enthaltenen Reaktanten bzw. die sich bei der Entladung der Speicherzelle bildenden Reaktionsprodukte sind sehr korrosiv. Es ist nicht auszuschließen, daß die mit den Reaktanten in Kontakt kommenden metallischen Bauteile des Gehäuses deshalb mit der Zeit zerstört werden. Zur Behebung dieser Nachteile wurde bereits in der Zeitschrift "Thin Solid Films 83", 1981, Seite 417 vorgeschlagen, die Innenflächen des metallischen Gehäuses dieser Speicherzellen mit einem Korrosionsschutz zu überziehen. Als möglicher Korrosionsschutz ist eine Legierung aus Chrom, Nickel, Kobalt und Molybdän beschrieben.

Aus der DE-OS 24 57 418 ist eine elektrochemische Speicherzelle bekannt, auf deren Innenflächen ein Korrosionsschutz aus Graphit aufgetragen ist.

In der US-PS 37 49 603 ist ein metallisches Gehäuse aus Leichtmetall beschrieben, dessen Innenflächen durch einen Überzug aus Molybdänsulfid vor Korrosion geschützt werden.

Aus der DE-OS 31 17 381 ist ein Verfahren zur Herstellung einer elektrochemischen Speicherzelle beschrieben, bei dem die Innenflächen des metallischen Gehäuses mit einem Überzug aus Titan, Mangan, Eisen, Kobalt oder Nickel überzogen werden.

Die vorgenannten Möglichkeiten sind zwar in der Lage, den Korrosionswiderstand des Gehäuses kurzfristig zu verbessern, jedoch ist hiermit der Nachteil verbunden, daß der Innenwiderstand der Speicherzellen mit zunehmenden Alter durch Bildung von sulfidhaltigen Schichten auf der Innenwand des Gehäuses sehr stark ansteigt oder sich sonstige nicht leitende Schichten bilden. Ferner sind die meisten für den Korrosionsschutz verwendeten Werkstoffe sehr teuer, wodurch der Gesamtpreis der Speicherzelle wesentlich vergrößert wird.

Der Erfindung liegt deshalb die Aufgabe zugrunde, eine elektrochemische Speicherzelle mit einem Gehäuse aus Leichtmetall zu schaffen, das einen Korrosionsschutz aufweist, der kostengünstig herzustellen ist.

Diese Aufgabe wird erfindungsgemäß durch die Merkmale des Patentanspruches 1 gelöst.

Die erfindungsgemäße Speicherzelle verfügt über einen Korrosionsschutz, der kostengünstig hergestellt werden kann, da keine teuren Werkstoffe wie Titan oder Molybdän und nur wenig Chrom für seine Ausbildung erforderlich sind. Als besonders wesentlich ist hervorzuheben, daß bei diesem Korrosionsschutz ein Zuviel an Chrom negative Einwirkungen auf den Korrosionswiderstand hat. Der elektrische Widerstand der Schicht ist niedrig und weist auch nach längerer Zeit immer noch den gleichen Wert auf. Dies ist insbesondere deshalb von Bedeutung, da für die Ausbildung des Korrosionsschutzes Aluminium verwendet wird, das in reiner Form die Tendenz zur Bildung von nicht leitendem Aluminiumsulfid hat. Der erfindungsgemäße Korrosionsschutz weist die Eigenschaft auf, daß er auf seiner Oberfläche auch nach längerem Betrieb der Speicherzelle nur solche Mischsulfide bildet, die elektrisch leitfähig sind. Der Gehalt an Aluminium in der Legierung, welche zur Ausbildung des Korrosionsschutzes verwendet wird, ist hierfür sehr wesentlich. Er muß zwischen 9 und 13 Gew.% bezogen auf das Gesamtgewicht der Legierung liegen und darf nicht größer oder kleiner sein. Wird die Menge an Aluminium unterschritten, so ist die Korrosionsanfälligkeit der Schutzschicht erhöht. Wird der Aluminiumgehalt auf über 13 Gew.% erhöht, so steigt der elektrische Widerstand der Speicherzelle insbesondere bei der Anwesenheit von Natriumpolysulfid.

Der Anteil des Chroms an der Legierung sollte 20 bis 30 Gew.% bezogen auf das Gesamtgewicht der Legierung betragen. Auch diese Menge sollte nicht unter- bzw. überschritten werden. Der restliche Anteil der Legierung wird durch Eisen gebildet. Erfindungsgemäß wird die Legierung durch Plasmaspritzen auf die Innenflächen des Gehäuses aufgetragen, wodurch eine beständige Haftung der Korrosionsschutzschicht gewährleistet wird.

Weitere erfindungswesentliche Merkmale sind in den Unteransprüchen gekennzeichnet.

Die Erfindung wird nachfolgend anhand einer Zeichnung erläutert.

Die einzige zur Beschreibung gehörende Figur zeigt eine elektrochemische Speicherzelle 1, die nach außen hin durch ein metallisches Gehäuse 2 begrenzt wird. Das Gehäuse ist bei der hier dargestellten Ausführungsform becherförmig ausgebildet. Es ist aus Leichtmetall, vorzugsweise aus Aluminium hergestellt. Im Inneren des Gehäuses 2 ist ein ebenfalls becherförmig ausgebildeter Festelektrolyt 3 angeordnet. Er ist aus Betaaluminiumoxid gefertigt. Sein Innenraum dient als Anodenraum 4, der mit Natrium gefüllt ist. Die Abmessungen des Festelektrolyten 3 sind so gewählt, daß zwischen seinen Außenflächen und den Innenflächen des metallischen Gehäuses 2 ein zusammenhängender Zwischenraum verbleibt, der als Kathodenraum 5 dient. Der Kathodenraum 5 enthält die Elektrode 6, die aus einem filz- bzw. faserförmigen Material auf der Basis von Graphit oder Kohlenstoff gefertigt und mit Schwefel getränkt ist. Erfindungsgemäß sind die Innenflächen des Gehäuses 2 von einer Korrosionsschutzschicht 10 überzogen. Diese Korrosionsschutzschicht 10 wird durch eine Legierung gebildet, deren Bestandteile Aluminium, Chrom und Eisen sind. Erfindungsgemäß enthält die Legierung 9 bis 13 Gew.% Aluminium und 20 bis 30 Gew.% Chrom, bezogen auf das Gesamtgewicht der Legierung, während der restliche Anteil der Legierung durch Eisen gebildet wird. Die Legierung liegt in Pulverform vor und wird mittels Plasmaspritzens bzw. Flanschspritzens auf die Innenflächen des Gehäuses 2 aufgetragen. Vor dem Auftragen der Korrosionsschutzschicht 10 werden die Innenflächen des zu schützenden Gehäuses 2 gereinigt. Das Auftragen des die Legierung bildenden Pulvers mittels Plasmaspritzen gewährleistet eine beständige Haftung der Korrosionsschutzschicht 10 auf den Innenflächen des Gehäuses. Die Korrosionsschutzschicht 10 wird vorzugsweise 0, 1 mm dick auf die Innenflächen des Gehäuses 2 aufgetragen. Sie weist einen Ausdehnungskoeffizienten auf, der so groß ist, daß auftretende mechanische Spannungen beim Aufheizen und Abkühlen der Speicherzelle zu keinen Rißbildungen in der Korrosionsschutzschicht 10 führen.

Nach der Ausbildung der erfindungsgemäßen Korrosionsschutzschicht 10 wird die Speicherzelle 1 zusammengebaut, indem zunächst der Kathodenraum 5 mit der Elektrode 6, die den Schwefel enthält, ausgefüllt und anschließend der Festelektrolyt 3 in das metallische Gehäuse 2 eingesetzt wird. Am oberen offenen Ende des Festelektrolyten 3 ist ein Isolierring 7 angeordnet, der aus Alphaaluminiumoxid gefertigt ist. Er ist über ein Glaslot (hier nicht dargestellt) mit dem Festelektrolyten 3 verbunden und steht nach außen über, so daß hierdurch ein Flansch gebildet wird. Die Abmessungen des Rings 7 sind so gewählt, daß er an die Innenflächen des metallischen Gehäuses 2 angrenzt und damit den Kathodenraum 5 nach außen verschließt. Der Verschluß des gesamten Innenraums der Speicherzelle 1 erfolgt über einen Deckel 8, der mit dem metallischen Gehäuse 2 dauerhaft verbunden ist. Der Deckel 8 ist aus einem elektrisch leitenden Material gefertigt. An seiner nach unten weisenden Seite ist ein Stab 9 befestigt, der ebenfalls aus einem elektrisch leitenden Material gefertigt ist und als anodischer Stromkollektor dient. Als kathodischer Stromkollektor dient das metallische Gehäuse 2.

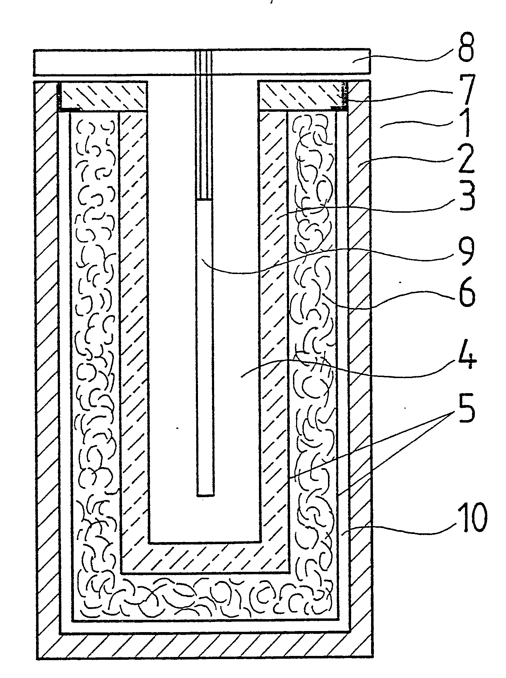

## Ansprüche

1. Elektrochemische Speicherzelle auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse (2) begrenzt sind, das auf seinen Innenflächen mit einer Korrosionsschutzschicht (10) versehen ist, dadurch gekennzeichnet, daß die Korrosionsschutzschicht (10) durch eine Legierung gebildet ist, die als wesentliche Bestandteile wenigstens ein Leichtmetall und mindestens ein Schwermetall aufweist.

2. Elektrochemische Speicherzelle nach Anspruch 1, dadurch gekennzeichnet, daß die Legierung als wesentliche Bestandteile Aluminium, Chrom und Eisen aufweist.

3. Elektrochemische Speicherzelle nach einem der Ansprüche 1 oder 2, dadurch gekennzeichnet, daß die Legierung 9 bis 13 Gew.% Aluminium und 20 bis 30 Gew.% Chrom bezogen auf das Gesamtgewicht der Legierung aufweist und der Rest der Legierung aus Eisen besteht.

4. Elektrochemische Speicherzelle nach einem der Ansprüche 1 bis 3, dadurch gekennzeichnet, daß die Korrosionsschutzschicht (10) in einer Dicke von 0,1 mm auf die Innenflächen des Gehäuses (2) aufgetragen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 595 192 (CHLORIDE SILENT POWER LTD)<br>* Seite 2, Zeilen 13-44; Seite 3, Zeilen 71-87; Ansprüche *<br>--- | 1,2,4 | H 01 M 4/66<br>H 01 M 10/39 |
| X | PROCEEDINGS OF THE SYMPOSIUM ON SODIUM-SULFUR BATTERIES, PROC. ELECTROCH. SOC., Band 87-5, Seiten 237-246, The Electrochemical Society, Inc.; A.P. BROWN et al.: "The corrosion of metals and alloys by sodium polysulfide melts at 350 degrees centigrades<br>* Zusammenfassung; Seiten 240,241,244 *<br>--- | 1,2 | |
| X | DE-A-2 720 726 (BROWN, BOVERI & CIE)<br>* Ansprüche; Seite 7, Absatz 3 *<br>--- | 1 | |
| X | US-A-4 460 662 (P.A. DAMROW)<br>* Zusammenfassung; Spalte 8, Zeile 41 - Spalte 9, Zeile 19 *<br>--- | 1 | |
| X | GB-A-2 182 347 (THE SECRETARY OF STATE FOR DEFENCE)<br>* Insgesamt *<br>--- | 1-3 | RECHERCHIERTE SACHGEBIETE (Int. Cl.4)<br><br>H 01 M 4/66<br>H 01 M 10/39 |
| X | JOURNAL OF THE ELECTROCHEMICAL SOCIETY, Band 126, Nr. 12, Dezember 1979, Seiten 2254-2257, Manchester, New Hampshire, US; E.M. JALLOULI et al.: "Fe-Cr-Al Alloy, high temperature corrosion in sulfur vapor"<br>* Insgesamt *<br>---       -/- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 12-04-1989 | DE VOS L.A.R. |

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EXTENDED ABSTRACTS, Band 84, Nr. 2, Oktober 1984, Seiten 151-152, Nr. 102, New Orleans, Louisiana, US; F. GROSS et al.: "Present tasks of research in sodium/sulfur battery development" * Rechte Spalte, Absatz 3 * --- | 1 | |
| D,A | EP-A-0 064 213 (BROWN, BOVERI & CIE) * Ansprüche 1,6-11 * --- | 1 | |
| A | MATERIALS PERFORMANCE, Band 20, Nr. 2, Februar 1981, Seiten 13-18, Texas, Houston, National Association of Corrosion Engineers, US; R.R. DUBIN: "Evaluation of container materials for the sodium-sulfur battery * Seite 15, linke Spalte; Seite 17, rechte Spalte * ----- | 1 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 12-04-1989 | DE VOS L.A.R. |